# EUROPÄISCHE PATENTSCHRIFT

(11) **EP 1 535 247 B1**
(45) Veröffentlichungstag und Bekanntmachung des Hinweises auf die Patenterteilung: **21.07.2010**
(21) Anmeldenummer: 03764913.4
(22) Anmeldetag: 28.02.2003
(51) Int. Cl.: G07C 9/00, F16P 3/00, B25F 5/00

(54) **SYSTEM ZUR UNFALLVERHÜTUNG**
SYSTEM FOR ACCIDENT PREVENTION
SYSTEME DE PREVENTION D'ACCIDENTS

(30) Priorität: 19.07.2002 DE 10232934
(43) Veröffentlichungstag der Anmeldung: 01.06.2005
(73) Patentinhaber: Ident Technology AG, 82131 Gauting (DE)
(72) Erfinder: DONAT, Stefan, 81669 München (DE); RICHTER, Wolfgang, 82110 Germering (DE); ROSENBECK, Peter, 82131 Gauting (DE)
(74) Vertreter: Rössig, Rolf
(86) Internationale Anmeldenummer: PCT/EP2003/002080
(87) Internationale Veröffentlichungsnummer: WO 2004/010387

(56) Entgegenhaltungen:
- EP-A- 0 991 026
- EP-A- 1 187 375
- WO-A-00/15931
- CA-A- 2 283 552
- DE-A- 10 037 226
- US-A- 5 583 386
- US-A- 5 914 701
- US-A- 6 005 489

## Beschreibung

### Gebiet der Erfindung

Die vorliegende Erfindung betrifft ein System zur Unfallverhütung beim Einsatz von Gefährdungsrelevanten Geräten.

Aus DE 100 37 226 A1 ist ein System zur handlungsintegrierten Identifizierung eines Anwenders bekannt. Zur Identifizierung erforderliche Signale werden auf feldelektrischem Wege in den Benutzer eingekoppelt und über den Körper des Anwenders an ein System zur Identifizierung des Benutzers übertragen. Auf Grundlage der Auswertungsergebnisse des Identifizierungssystems erfolgt eine Sperrung oder eine Freigabe einer nachgeschalteten Einrichtung.

Aus EP 1 187 375 A1 ist ein Übertragungssystem bekannt welches ein Elektrodenpaar umfasst, dass derart in ein Kleidungsstückintegriert ist, dass sich die Elektroden nahe am Körper eines Anwenders befinden. Über diese Elektroden kann unter Einbindung des Körpers des Anwenders ein Stromkreis geschlossen werden über welchen Signale von und zu einem externen Schnittstellensystem übertragen werden können.

Um zu erreichen, dass Vorrichtungen und Systeme nur von bestimmten, sogenannten autorisierten Benutzern verwendet werden können, ist es bekannt, zur Überprüfung der Autorisierung von Benutzern diese kennzeichnenden Daten zu verwenden. Hierfür werden Identifizierungssysteme eingesetzt, die vor einem Betrieb zugeordneter Vorrichtungen und Systeme von Benutzern bereitgestellte, diese kennzeichnende Daten überprüfen, ob die Benutzer autorisiert sind, die Vorrichtungen und Systeme zu verwenden. Ist dies der Fall, übertragen die Identifizierungssysteme zu den Vorrichtungen und Systemen Daten, die deren Betrieb bzw. Verwendung zulassen, oder steuern diese entsprechend.

Um Identifizierungssystemen Benutzer kennzeichnende Daten bereitzustellen, ist es bekannt, tragbare Speichermedien (z.B. Smart-Cards, Chipkarten, ...) zu verwenden, die von den Benutzern mit den Identifizierungssystemen über geeignete Schnittstellen verbunden werden. Des Weiteren gibt es solche Daten drahtlos übertragende Datensender (Funksender), die über eine Datenübertragungsstrecke mit den Identifizierungssystemen Daten austauschen. Außerdem werden Identifizierungssysteme verwendet, bei denen Benutzer ihre kennzeichnenden Daten selbst eingeben, beispielsweise in Form von Codes, Kennnamen, PIN-Nummern, TAN-Nummern und dergleichen.

Ein Nachteil besteht dabei darin, dass zu überwachende Vorrichtungen und Systeme unabhängig davon verwendet werden können, ob ein Benutzer hierzu autorisiert ist oder Bedingungen vorliegen, die einer Verwendung entgegenstehen, nachdem Benutzer kennzeichnende Daten übertragen, die eine Autorisierung angeben, und die Vorrichtung bzw. das System in Antwort darauf zur Verwendung freigegeben wurden.

Dem entsprechend sind solche Ansätze nicht geeignet, die Verwendung von Geräten und Maschinen, wie z.B. Handgeräten, Werkzeugmaschinen, tragbaren elektrischen Werkzeugen, Haushaltsgeräten, etc., so zu kontrollieren, dass deren Betrieb nur von dazu berechtigten Benutzern veranlasst und durchgeführt werden kann.

Es kommt nämlich häufig vor, dass der Betrieb unterbrochen und zu einem späteren Zeitpunkt fortgesetzt wird. Dies hätte bei Verwendung bekannter Identifizierungssysteme zur Folge, dass, wenn einmal eine Freigabe erfolgt ist, der Betrieb auch von nicht berechtigten Benutzern oder in unzulässiger Weise wieder aufgenommen werden kann.

Auch eine Steuerung, bei der eine Wiederinbetriebnahme, beispielsweise nach einer vorgegebenen Zeitdauer nur nach einer erneuten Überprüfung der Autorisierung eines Benutzers möglich ist, stellt aus unterschiedlichen Gründen keine Lösung dar. So wäre es beispielsweise unpraktisch, jedes Mal einen Benutzercode einzugeben oder autorisierende Daten von einem Speichermedium zu übertragen, wenn der Betrieb nach einer Pause wieder aufgenommen werden soll.

Des Weiteren wird auf diese Weise ein unsachgemäßer Betrieb nicht verhindert, wenn beispielsweise zum Betrieb der Geräte und Maschinen erforderliche Schutzmaßnahmen nicht ergriffen wurden. Auch ein Betrieb durch nicht berechtigte Benutzer, beispielsweise Kinder oder nicht entsprechend geschulte Mitarbeiter, kann nicht verhindert werden, solang der Betrieb freigegeben ist, z.B. während der genannten Zeitdauer, innerhalb der eine Verwendung oder ein in Betrieb nehmen ohne erneute Überprüfung einer Benutzerautorisierung erfolgen kann.

### Aufgabe der Erfindung

Aufgabe der vorliegenden Erfindung ist es, Lösungen bereit zu stellen, die eine Verwendung und einen Betrieb von gefährdungsrelevanten Geräten, wie z.B. tragbaren Werkzeugen, nur dann ermöglichen, wenn für den Betrieb vorgegebene Bedingungen erfüllt sind.

### Erfindungsgemäße Lösung

Die vorgenannte Aufgabe wird erfindungsgemäß durch ein System mit den in Patentanspruch 1 angegebenen Merkmalen gelöst.

Das erfindungsgemäße System umfasst wenigstens ein Benutzerendgerät mit einer Ausgabeeinheit, mit der Signale, die autorisierende Daten umfassen, über den Körper eines Benutzers übertragen werden können. Zum Empfang dieser Signale ist ein Signalempfänger mit einer entsprechenden Schnittstelle vorgesehen. Die empfangenen Signale bzw. die daraus ermittelten autorisierenden Daten werden von entsprechenden Einheiten des Signalempfängers überprüft. Wird festgestellt, dass die empfangenen autorisierenden Daten gültig sind, d.h. tatsächlich eine Autorisierung zum Betrieb eines Gerätes angeben, erzeugt der Signalempfänger ein Freigabesignal, das den Betrieb des Gerätes zulässt.

Zum Übertragen der die autorisierenden Daten umfassenden Signale über den Körper des Benutzers ist es vorgesehen, dass das Benutzerendgerät diese Daten kapazitiv und/oder induktiv mittels einer Kopplungseinheit in die Haut eines Benutzers einkoppelt.

Mittels eines Tondecoders kann der Signalempfänger die in den Signalen des Benutzerendgeräts enthaltenen autorisierenden Daten ermitteln, um beispielsweise unter Verwendung eines Vergleichers überprüfen, ob diese den Benutzer tatsächlich zu einer Verwendung des Gerätes autorisieren.

Zum Überprüfen der autorisierenden Daten kann der Signalempfänger Speichereinrichtungen mit einem oder mehreren Speicherplätzen umfassen, in denen Daten vorliegen, die zum Vergleich mit den empfangenen autorisierenden Daten dienen. So können z.B. die Überprüfungseinheiten des Signalempfängers ein Korrespondenzregister mit wenigstens zwei, Daten zur Überprüfung der autorisierenden Daten aufweisenden Speicherstellen umfassen.

Vorzugsweise werden die zur Überprüfung der autorisierenden Daten verwendeten Daten in Abhängigkeit von den von dem Benutzerendgerät empfangenen Signalen ausgewählt. Hierbei kann z.B. der Signalempfänger abhängig von Steuerbefehlen in den Signalen des Benutzerendgeräts auf Daten zur Überprüfung der autorisierenden Daten zugreifen.

Vorzugsweise sendet das Benutzerendgerät die die autorisierenden Daten umfassenden Signale kontinuierlich oder periodisch aus. Des weiteren kann der Signalempfänger so ausgelegt sein, dass er die empfangenen autorisierenden Daten kontinuierlich oder periodisch überprüft.

Zur Steuerung des zu überwachenden Gerätes ist es vorgesehen, dass der Signalempfänger die Energieversorgung des Gerätes unterbricht, wobei der Signalempfänger baueinheitlich in das Gerät integriert oder mit dessen Energieversorgung verbunden sein kann.

Die vorliegende Erfindung betrifft weiterhin eine Handgriffeinrichtung sowie eine Sicherheitsschaltungsanordnung, insbesondere für kraftbetriebene Werkzeugzeuge beispielsweise Elektrowerkzeuge zur Stein- Holz- und/oder Metallbearbeitung.

Beim Einsatz kraftbetriebener Werkzeuge besteht das Problem, dass zur sicheren Führung derselben unter Umständen erhebliche Haltekräfte erforderlich sind. Diese Werkzeuge sind daher üblicherweise mit einer ersten und einer zweiten Griffeinrichtung versehen, so dass das Werkzeug beidhändig ergriffen werden kann. Die beiden Griffeinrichtungen sind hierbei vorzugsweise derart weit voneinander beabstandet, dass über die, auf die Griffeinrichtungen aufgebrachten Handkräfte, ein ausreichendes Abstütz-Drehmoment erzeugt werden kann. Insbesondere bei manuell frei positionierbaren Geräten z.B. Bohrmaschinen besteht das Problem, dass beim Einsatz derselben unter Umständen unerwartet hohe Haltekräfte erforderlich sind, die in Abhängigkeit von der Relativposition des Werkzeug-Anwenders gegenüber dem Werkzeug, nur bedingt aufgebracht werden können. Ferner besteht das Problem, dass das Werkzeug unter Umständen nur bedingt beidhändig ergriffen werden kann und dass insbesondere dann, wenn eine der beiden Handgriffeinrichtungen von dem Werkzeug abnehmbar ist, das Werkzeug ohne dieser zusätzlichen Griffeinrichtung verwendet wird.

Die vorliegende Erfindung stellt Lösungen bereit, die einen unter arbeitsschutztechnischen Gesichtspunkten und/oder auch im Hinblick auf den Werkzeugeinsatz sowie die Werkzeugführung verbesserten Einsatz dieser kraftbetriebenen Werkzeuge ermöglichen.

Der vorliegenden Erfindung liegt Ansatz zugrunde, eine Handgriffeinrichtung bereit zu stellen, die eine Erfassung des Werkzeug-Greifzustandes, und eine dem Greifzustand Rechnung tragende Leistungssteuerung des Werkzeuges ermöglicht.

Dadurch wird es auf vorteilhafte Weise möglich, unter Berücksichtigung des Greifzustandes des Werkzeuges, den Eintritt unzulässiger Werkzeug-Betriebszustände zu verhindern oder das Werkzeug über dessen Greifzustand zu steuern. Im Falle einer Bohrmaschine wird es zum Beispiel in vorteilhafter Weise möglich, die Leistungsaufnahme derselben oder das maximal zulässige Drehmoment unter Berücksichtigung des Greifzustandes abzustimmen. Hierdurch wird es möglich, im Falle lediglich einhändigen Ergreifens der Bohrmaschine oder bei Aufbringung nur geringer Haltekräfte auf die Handgriffeinrichtung, unerwartete Rückschlagbewegungen der Bohrmaschine zu vermeiden.

Zur Lösung der obigen Aufgabe stellt die vorliegende Erfindung eine Handgriffeinrichtung bereit. Diese Handgriffeinrichtung umfasst eine, einen Handgriff-Basiskörper einschließende Handgriffaussenfläche, die einen Handinnenflächen-Auflageabschnitt aufweist, wobei im Bereich des Handinnenflächen-Auflageabschnitts wenigstens eine drucksensitive Zone ausgebildet ist, zur Generierung eines hinsichtlich des Handgriff-Greifzustandes indikativen Signales.

Hierdurch wird es möglich, über die durch die Handinnenflächen des Werzeug-Anwenders auf die Handgriffeinrichtung aufgebrachten Kräfte, den Greif-Zustand zu erfassen und ein entsprechendes Signal zu generieren. Dieses Signal kann als Ein/Aussignal generiert werden und damit angeben, ob die auf die Handgriffeinrichtung ausgeübten Handkräfte über oder unter einem vorzugsweise festgelegten Griff-Kraftgrenzwert liegen.

Alternativ zu der Ausgabe eines auf einem Schwellenwert beruhenden Ausgangssignales - oder auch in Kombination mit dieser Maßnahme - ist es auch möglich, das Signal derart zu generieren, dass dieses für unterschiedliche Griff-Greifkräfte jeweils indikativ ist und zum Beispiel eine Leistungssteuerung proportional zur Greifkraft ermöglicht.

Gemäß einer besonders bevorzugten Ausführungsform der Erfindung ist die Handgriffeinrichtung derart ausgestaltet, dass im Bereich des Handinnenflächen-Auflageabschnitts mehrere drucksensitive Zonen ausgebildet sind. Hierdurch wird es auf vorteilhafte möglich, den tatsächlichen Handgriff-Greifzustand klassifiziert zu erfassen.

Die drucksensitive Zone bildet gemäß einer besonders bevorzugten Ausführungsform der Erfindung Teil eines Fluidkammersystems. Die drucksensitive Zone kann hierbei durch eine elastisch verformbare Druckkammerwandung gebildet sein. Durch Belastung dieser Druckkammerabdeckung ist es möglich, in dem Fluidkammersystem einen Druck zu erzeugen, der in einem hinreichend eindeutigen Zusammenhang mit der Belastung der Druckkammerabdeckung steht.

In der Druckkammer ist gemäß einer besonders bevorzugten Ausführungsform der Erfindung ein Fluid, ein Gel-Material oder gegebenenfalls auch eine Gasfüllung vorgesehen. Über das in der Druckkammer aufgenommene Füllmedium wird es möglich, die Druckmessung mittels eines drucksensitiven Messorganes beispielsweise einem Piezo-Element oder einem DMS-System, vorzunehmen.

Gemäß einer besonders bevorzugten Ausführungsform der Erfindung wirkt das in der Druckkammer aufgenommene Füllmedium gegebenenfalls unter Zwischenschaltung einer Druckleitung mit einer Schalteinrichtung zusammen, so dass über das in der Druckkammer aufgenommene Füllmedium die Schalteinrichtung betätigbar ist.

Die Druckkammer ist insbesondere hinsichtlich des Verlaufs der Druckkammerabdeckung im Bereich des Handinnenflächen-Auflageabschnittes derart ausgebildet, dass diese eine dem Handballenauflagebereich und eine dem Fingerinnenflächenbereich zugeordnete drucksensitive Zone bildet. Hierdurch wird es möglich, den Greifzustand anhand der über den Handballen und die Fingerinneflächen aufgebrachten Kräfte zu klassifizieren.

Es ist möglich, im Bereich der Handgriffeinrichtung mehrere, den einzelnen Fingerinnenflächen zuordbare, drucksensitive Zonen auszubilden. Dadurch wird es möglich, das hinsichtlich des Handgriff-Greifzustandes indikative Signal derart zu generieren, dass dieses Informationen über die, durch die einzelnen Fingerinnenflächen aufgebrachten Kräfte enthält.

Gemäß einer besonders bevorzugten Ausführungsform der Erfindung ist im Bereich der Handgriffeinrichtung eine Lageerfassungseinrichtung vorgesehen, über die die Einsatzposition bzw. die Ausrichtung des kraftbetriebenen Werkzeuges erfasst werden kann. Hierbei ist es möglich, das durch die Lageerfassungseinrichtung generierte Signal derart zu berücksichtigen, dass das Werkzeug nur in einer definierten Ausrichtung betreibbar ist. Es ist möglich, auf Grundlage des seitens der Lageerfassungseinrichtung generierten Signales ein akustisches oder optisches Benutzer-Feedback zu generieren.

Die vorangehend beschriebene Handgriffeinrichtung ist gemäß einer besonders bevorzugten Ausführungsform der Erfindung als Handgriffeinrichtung für eine Bohrmaschine vorgesehen.

Insbesondere in Kombination mit den vorangehend beschriebenen Massnahmen - oder auch alternativ hierzu - wird die eingangs angegebene Aufgabe erfindungsgemäß auch gelöst durch eine Handgriffeinrichtung mit einer Signalsendeeinrichtung zum Aussenden eines hinsichtlich des Handgriff-Greifzustandes indikativen Signales.

Die Aussendung des hinsichtlich des Greifzustandes indikativen Signales erfolgt gemäß einer besonders bevorzugten Ausführungsform der Erfindung, indem dieses in die Hand des Werkzeuganwenders eingekoppelt wird. Die Einkoppelung erfolgt vorzugsweise auf Grundlage elektrostatischer Wechselwirkungseffekte. Alternativ hierzu - oder auch in Kombination mit dieser Massnahme - ist es auch möglich, das Signal auf elektromagnetischem oder akustischem Wege zu einer im Bereich des Werkzeuges vorgesehenen Empfangseinrichtung zu übertragen.

In vorteilhafter Weise sind hierbei im Bereich der Handgriffeinrichtung in Form einer elektrischen Schaltung, Signalmodulationseinrichtungen vorgesehen, zur Modulation des seitens der Signalsendeeinrichtung, insbesondere der Einkoppelungseinrichtung emittierten Signales.

Über das derart modulierte Signal ist es möglich, ein Datentelegramm zu übertragen, das beispielsweise hinsichtlich des Hangriff-Greifzustandes indikative Informationen enthält.

Die eingangs angegebene Aufgabe wird erfindungsgemäß auch durch ein kraftbetriebenes Werkzeug gelöst, das eine Gehäuseeinrichtung, eine erste Handgriffeinrichtung und eine zweite Handgriffeinrichtung umfasst, wobei das Werkzeug mit einer Greifzustands-Erfassungseinrichtung versehen ist, zur Erfassung eines für den Greifzustand des Gerätes indikativen Signales. Es ist möglich, wenigstens eine der beiden Handgriffeinrichtungen derart auszubilden, dass beispielsweise Haltekraft- oder fingerdruckspezifische Informationen in dem Signal enthalten sind. Hierdurch wird es beispielsweise auch möglich, den Betrieb oder die Leistungssteuerung im Einklang mit den auf die entsprechende Handgriffeinrichtung aufgebrachten Greif-Kräften vorzunehmen.

### Kurzbeschreibung der Figuren

Bei der vorliegenden Beschreibung bevorzugter Ausführungsformen wird auf die beigefügten Zeichnungen Bezug genommen, von denen zeigen:
- Fig. 1: eine schematische Darstellung einer Ausführungsform eines erfindungsgemäßen Benutzerendgerätes,
- Fig. 2: eine schematische Darstellung einer weiteren Ausführungsform ei- nes erfindungsgemäßen Benutzerendgerätes,
- Fig. 3: eine schematische Darstellung einer Ausführungsform eines erfindungsgemäßen Benutzerendgerätes als Karte,
- Fig. 4: eine schematische Darstellung einer Ausführungsform eines erfin- dungsgemäßen Signalempfängers,
- Fig. 5: eine schematische Darstellung einer weiteren Ausführungsform ei- nes erfindungsgemäßen Signalempfängers,
- Fig. 6: eine schematische Darstellung einer von einem erfindungsgemäßem Benutzerendgerät ausgesendeten Signalsequenz, und
- Fig. 7: eine schematische Darstellung einer Ausführungsform eines erfin- dungsgemäßen Systems.
- Fig. 8: eine schematische Darstellung eines mit einer ersten und einer zweiten Handgriffeinrichtung ausgestatteten kraftbetriebenen Werkzeuges;
- Fig. 9a: eine schematische Darstellung zur Erläuterung des Aufbaus einer Einrichtung zur Generierung eines hinsichtlich der Werkzeug- Ausrichtung indikativen Signales.

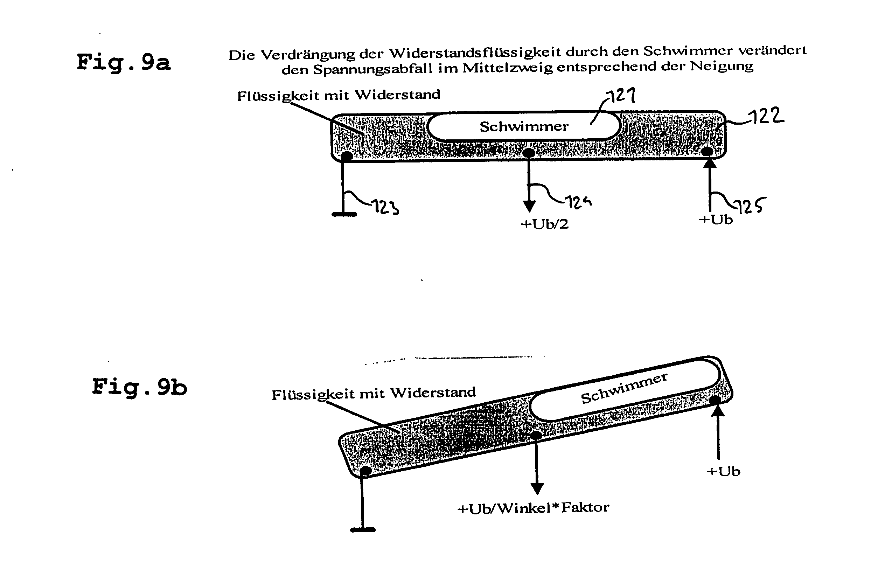

- Fig. 9: die Einrichtung nach Fig. 9a in Schrägstellung.

### Beschreibung bevorzugter Ausführungsformen

Im Folgenden werden am Beispiel eines tragbaren elektrischen Handwerkzeuges bevorzugte Ausführungsformen des Systems zur Unfallverhütung erläutert, wobei nach einer Beschreibung einzelner Systemkomponenten deren Funktion und Verwendung dargelegt werden.

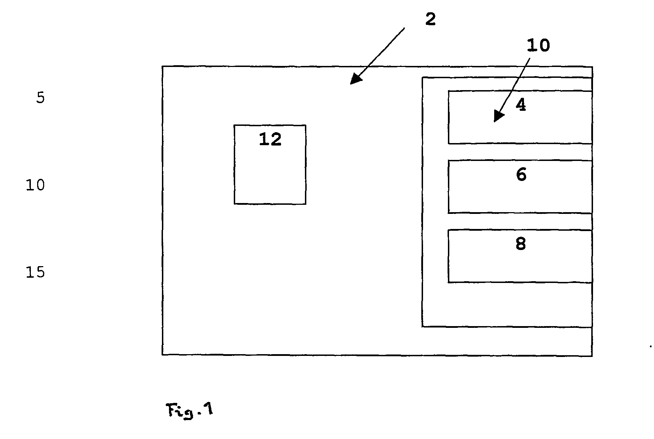

Wie eingangs ausgeführt, werden Daten, die einen Benutzer zur Inbetriebnahme und Verwendung eines elektrischen Handwerkzeuges autorisieren mittels eines Benutzerendgerätes über den Körper des Benutzers zu dem tragbaren elektrischen Handwerkzeug übertragen. In Fig. 1 ist eine Ausführungsform eines Benutzerendgerätes 2 schematisch dargestellt.

Zur Benutzung eines tragbaren elektrischen Handwerkzeuges autorisierende Daten werden von dem Benutzerendgerät 2, das auch als Signalgeber bezeichnet werden kann, unter Verwendung von Signalen über die Haut eines Benutzers übertragen. Dies kann erreicht werden, indem das Benutzerendgerät 2 Signale unmittelbar über eine Kontaktstelle mit der Haut oder mittelbar kapazitiv und/oder induktiv in die Haut einkoppelt. Hierbei dienen die Kontaktstelle bzw. für eine kapazitive und/induktive Kopplung verwendeten Komponenten als ein Pol, wobei für den anderen Pol parasitäre Kapazitäten zwischen dem Benutzerendgerät 2 und einem im Folgenden beschriebenen Empfänger benutzt werden (z.B. Erde, Körper, Massepotential des tragbaren elektrischen Handwerkzeugs, etc.).

Bei einer indirekten, kapazitiven und/oder induktiven, Einkopplung von Signalen werden mittels geeigneter Koppler Streufelder erzeugt, die Signale der Benutzerendgerätes 2 in die Haut einspeisen. Zu Übertragung von Signalen unmittelbar über eine Kontaktstelle kann das Benutzerendgerät 2 selbst direkt die Haut seines Benutzers berühren oder mit einer unmittelbar mit der Haut des Benutzers verbundenen Vorrichtung (z.B. Elektroden, Patches, etc.) verbunden sein.

Bei dem in Fig. 1 schematisch dargestellten Benutzerendgerät 2 sind zur kapazitiven und/oder induktiven Einkopplung von Signalen eine Kopplungseinrichtung 4, zur unmittelbaren Einkopplung von Signalen über eine Kontaktstelle mit der Haut des Benutzers ein Kontaktbereich 6 und zur Übertragung mittels einer mit dem Körper des Benutzers verbundenen Elektrode und dergleichen ein Signalausgang 8 vorgesehen. Die Komponenten 4, 6 und 8 des Benutzerendgerätes 2 werden im Folgenden zusammenfassend aus Ausgangseinheit 10 bezeichnet. Entgegen der Darstellung von Fig. 1 kann die Ausgangseinheit 10 einzelne oder mehrere der Komponenten 4, 6 und 8 umfassen, was im Wesentlichen dadurch bestimmt wird, für welches Gerät bzw. welche Maschine das Benutzerendgerät 2 verwendet werden soll und wie ein Benutzer das Benutzerendgerät 2 verwenden soll.

Wenn beispielsweise ein mit einen tragbaren elektrischen Handwerkzeug zu verwendendes Benutzerendgerät 2 die Form einer Scheck- oder Chipkarte hat, bietet es sich an, das Benutzerendgerät 2 mit einer nur die Kopplungseinrichtung 4 umfassenden Ausgangseinheit 10 auszustatten. Um die zur Verwendung des tragbaren elektrischen Handwerkzeugs autorisierenden Daten in die Haut eines Benutzers einzukoppeln, und, wie im Folgenden Beschrieben, zu dem tragbaren elektrischen Handwerkzeug zu übertragen, ist dann kein unmittelbarer Kontakt des Benutzerendgerätes 2 mit der Haut des Benutzers erforderlich. Vielmehr können mittels der Kopplungseinrichtung 4 zur Übertragung der autorisierenden Daten erforderliche Signale in die Haut des Benutzers eingekoppelt werden, wenn das Benutzerendgerät 2 sich beispielsweise in der Hosen- oder Hemdtasche befindet.

Soll beispielsweise erreicht werden, dass ein Benutzer eines tragbaren elektrischen Handwerkzeugs bei dessen Verwendung einen Schutzhelm, eine Schutzbrille oder dergleichen trägt, kann das Benutzerendgerät 2 in eine solche Schutzkleidung integriert sein und mit einer die Kopplungseinrichtung 4 und/oder den Kontaktbereich 6 aufweisenden Ausgangseinheit 10 ausgestattet sein.

Um zu gewährleisten, dass die Ausgangseinheit 10 die Haut des Benutzers in einer zur Signalübertragung bzw. Signaleinkopplung erforderlichen Weise berührt, ist zumindest die Kopplungseinrichtung 4 und/oder der Kontaktbereich 6 so an einer Schutzkleidung anzuordnen, dass beim Tragen der Schutzkleidung eine Einkopplung der autorisierenden Daten bzw. ein unmittelbarer Kontakt des Kontaktbereichs 6 mit der Haut des Benutzers gewährleistet ist. Beispielsweise kann der Kontaktbereich 6 in den Bereichen einer Schutzbrille angeordnet sein, die beim Tragen der Schutzbrille eine Ohrmuschel oder den Nasenrücken des Benutzers berühren. Entsprechendes gilt bei einer kapazitiven und/oder induktiven Signalübertragung.

Zur Erzeugung von über die Ausgangseinheit 10 zu übertragenden Signalen wird ein Signalgenerator 12 verwendet, der beispielsweise ein spannungsgesteuerter Oszillator (VCO; engl. Voltage control ozcillator) sein kann. Zur Erzeugung von autorisierende Daten wiedergebenden Signalen ist es vorgesehen, den Signalgenerator 12 bei unterschiedlichen Frequenzen, unterschiedlichen Frequenzdauern, unterschiedlichen Signalpausen und Kombinationen derselben zu betreiben, wobei so erzeugte Signale Charakteristika aufweisen, die, wie im Folgenden beschrieben, zur Überprüfung der Autorisierung eines Benutzers verwendet werden. Ferner erlaubt es die Erzeugung unterschiedlicher Signale mittels des Signalgenerators 12 verschiedene Benutzerendgerät 2 zu unterscheiden.

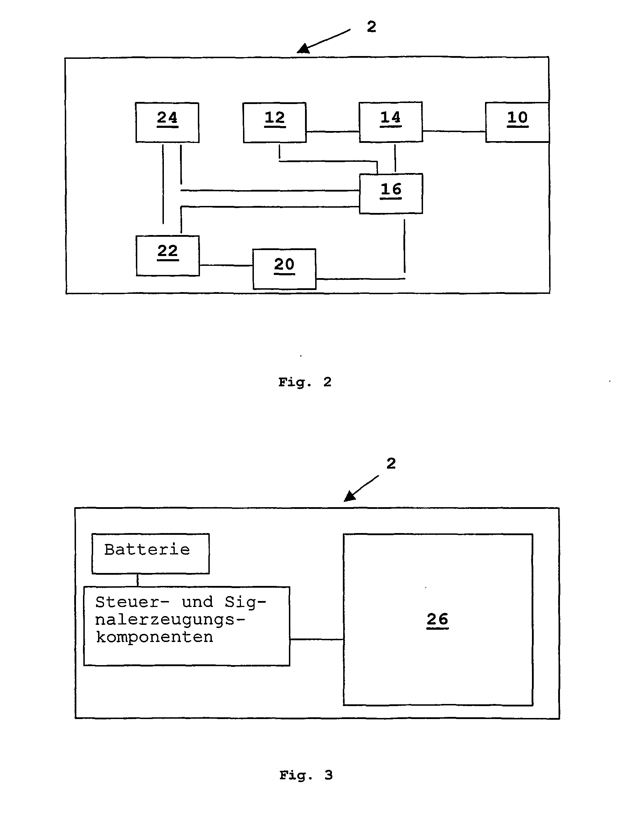

Bei der in Fig. 2 schematisch dargestellten Ausführungsform des Benutzerendgerät 2 können den von dem Signalgenerator 12 erzeugten Signalen Informationen mittels Amplituden- und/oder Frequenzmodulation ausgeprägt werden. Neben einer Verschlüsselung solcher Informationen ist es möglich, die Informationen wiederholend auf die Signale des Signalgenerators 12 aufzumodulieren, insbesondere wenn die Informationen eine benutzerkennzeichnende Kennung und/oder autorisierende Daten wenigstens teilweise charakterisieren. Dem entsprechend ist es möglich, autorisierende Daten durch die von dem Signalgenerator 12 erzeugten Signale, durch auf diese aufmodulierte Informationen oder durch eine Kombination derselben bereitzustellen.

Wie in Fig. 2 zu sehen, wird zum Aufmodulieren von Informationen auf Signale des Signalgenerators 12 ein Mischer oder Modulator 14 verwendet. Zur Steuerung des Signalgenerators 12 und des Modulators 14 dient eine als Konfigurator bezeichnete Rechnereinheit 16. Der Konfigurator 16 kann den Signalgenerator 12 und den Modulator 14 bzw. weitere im Folgenden beschriebene Komponenten des Benutzerendgerätes 2 nach einem vorgegebenen, dem Konfigurator 16 fest zugeordneten Schema (z.B. in einem ROM-Bauteil) steuern. Um unterschiedliche von dem Konfigurator 16 bewirkte Steuerungsabläufe zu realisieren, kann der Konfigurator 16 über eine Eingangseinheit 18 programmiert und/oder mit entsprechenden Steuerungsdaten versorgt werden, die in einem nicht dargestellten Speicher abgelegt werden können.

Sollen beispielsweise autorisierende Daten durch Signale mit einer bestimmten Frequenz und auf diese Signale aufmodulierte Informationen wiedergegeben werden, steuert der Konfigurator 16 den Signalgenerator 12 zur Erzeugung der vorgegebenen Signalfrequenz an. Um Informationen, die wenigstens teilweise autorisierende Daten charakterisieren, Signalen des Signalgenerators 12 aufzumodulieren, greift der Konfigurator 16 auf einen entsprechenden Daten aufweisenden Speicher 20 zu. Die Daten des Speichers 20 werden von dem Konfigurator 16 an den Modulator 14 zusammen mit entsprechenden Steuerbefehlen übertragen, um Signale an die Ausgangseinheit 10 zu übertragen, die die vorgegebene Frequenz und die aufmodulierten Informationen aufweisen.

Eine zyklische Ausgabe von Daten des Speichers 20 kann beispielsweise erreicht werden, wenn der Speicher 20 als Schieberegister mit serieller Ausgabe gestaltet ist, der die Daten nacheinander und wiederholend an den Konfigurator 16 ausgibt. Hierfür kann ein Taktgeber 22 verwendet werden, um unter dessen Steuerung Daten des Speichers 20 beispielsweise bit- oder byteweise zu übertragen.

Um den Anfang von den Signalen des Signalgenerators 12 aufmodulierten Informationen ermitteln zu können, werden vor einem Aufmodulieren von Daten des Speichers 20 geeignete Informationen (z.B. Startbits) auf Signale des Signalgenerators 12 aufmoduliert. Dies ist insbesondere dann von Bedeutung, wenn die Daten des Speichers 20 Signalen des Signalgenerators 12 wiederholend aufmoduliert werden.

Mittels eines Zeitgebers 24 kann nach Übertragen von autorisierende Daten angebenden Signalen eine Pause definiert werden, nach der die nächste autorisierende Daten wiedergebende Signalfrequenz übertragen wird. Zur Reduzierung der zum Betrieb des Benutzerendgerätes 2 erforderlichen Leistung kann während der Pause das Benutzerendgerät 2 oder wenigstens einzelne Komponenten desselben in einen auch als Stand-by-Modus oder Schlafmodus bezeichneten Betriebszustand versetzt werden. Ein weiterer Vorteil der Verwendung von Pausen zwischen Signalfrequenzen besteht darin, dass bei Verwendung mehrerer Benutzerendgeräte 2 während der Pause einzelne oder mehrere Benutzerendgeräte 2 Signale kollisionsfrei aussenden können. Des Weiteren ist es vorgesehen, die Länge der Pausen randomisiert vorzugeben, um die Wahrscheinlichkeit zu reduzieren, dass bei Verwendung mehrerer Benutzerendgeräte 2 Signalübertragungen (teilweise) zeitlich überschneidend durchgeführt werden.

Um zu überprüfen, ob die von dem Benutzerendgerät 2 übertragenen Signale fehlerfrei übertragen bzw. empfangen wurden, kann der Konfigurator 12 Prüfsummen charakterisierende Informationen mittels des Modulators 16 den Signalen des Signalgenerators 12 aufmodulieren.

In der folgenden Tabelle Tab. 1 sind die Komponenten und deren Funktionen des Benutzerendgerätes 2 gemäß Fig. 2 aufgeführt:

**Tab. 1: Komponenten und Funktionen des Benutzerendgerätes**

| **Komponente** | **Aufgaben** | **Eigenschaften** |
|---|---|---|
| **Signalgeber VCO 12** | Variable Trägerfrequenz | Programierbarer Funktionsgenerator |
| **Speicher mit serieller Ausgabe 20** | Eindeutige Identifizierung | Schieberegister als Ringzähler |
| **Modulator/Mischer 14** | moduliert den Ladungstreiber | analoge Und-Schaltung |
| **Konfigurator 16** | Dynamische Steuerung | Programmierbar |
| **Zeitgeber (Burst/Sleep-Timer) 24** | dynamische Bursts, Powerdown | monostabil, variabler Burst |
| **Taktgeber 22** | Shifted ID (oneshot one-by-one) | Start/Stop + Impuls/Pause 1/50 |
| **Substrat** | Minus zur Stromversorgung | bildet kapazitiven Gegenpol |

Zur Energieversorgung des Benutzerendgerätes 2 können Batterien oder Akkumulatoren verwendet werden, wobei, wie oben ausgeführt, mittels des Zeitgebers 24 definierte Betriebspausen den Leistungsverbrauch reduzieren und damit die Gesamtbetriebsdauer erhöhen können. Eine solche Energieversorgung kann auch durch in den Figuren nicht dargestellte Solarzellen unterstützt oder bereitgestellt werden.

Die Verwendung von Solarzellen zur Energieversorgung des Benutzerendgerätes 2 hat weitere Vorteile. Ist es beispielsweise bei Verwendung eines Geräts oder einer Maschine erforderlich, das aus Sicherheitsgründe die im Arbeitsbereich vorherrschende Helligkeit vorbestimmte Mindestwerte aufweist, ist es vorgesehen, die Energieversorgung des Benutzerendgerätes 2 mit Solarzellen so zu konfigurieren, dass das Benutzerendgerät 2 erst betrieben werden kann, wenn Licht in ausreichendem Maß im Arbeitsbereich vorhanden ist. Zum Beispiel ist es möglich, eine Solarzelle zur Energieversorgung des Benutzerendgerätes 2 an einer Schutzbrille oder einem Schutzhelm anzuordnen. Wenn die in der Arbeitsumgebung vorherrschende Helligkeit zu gering ist, erzeugt die Solarzelle nicht die zum Betrieb des Benutzerendgerätes 2 erforderliche Energie.

Die zur Inbetriebnahme und Verwendung eines Gerätes oder einer Maschine erforderlichen autorisierenden Daten können auch personenbezogene Daten umfassen, die es erlauben, einen Benutzer des Benutzerendgerätes 2 eindeutig zu identifizieren.

In Abhängigkeit davon, mit welchen Geräten oder Maschinen das Benutzerendgerät 2 verwendet wird, kann es in Form von Anstecknadeln, Schlüsselanhängern, Aufklebern usw. ausgestaltet sein. Des Weiteren ist es vorgesehen, die Funktionen des Benutzerendgerätes 2 durch entsprechende, in andere Gegenstände oder Produkte integrierte Funktionskomponenten zu realisieren. So ist es beispielsweise möglich, durch entsprechende Bauteile und Schaltkreise, die in Sicherheitsschuhen, Schutzhelmen, Schutzbrillen und vergleichbaren Kleidungsstücken integriert sind, die Funktionen des in Fig. 1 und 2 dargestellten Benutzerendgerätes 2 bereitzustellen. Insbesondere ist es hier vorgesehen, das Benutzerendgerät 2 als Druckknopf auszuführen, der auf Kleidungsstücken angenietet oder angeknöpft werden kann.

Bei einer weiteren Ausführungsform des Benutzerendgerätes 2 werden dessen Komponenten inklusive Energieversorgung in einer flachen, mit einer Scheckkarte vergleichbaren Karte untergebracht. Wie in Fig. 3 schematisch dargestellt, werden Signale über eine kapazitive Fläche 26 in den Körper eines Benutzers eingekoppelt.

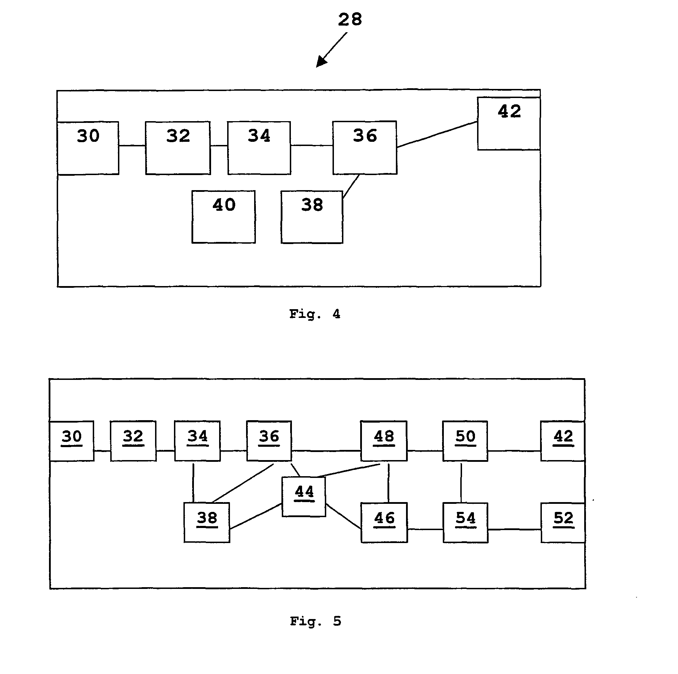

Zum Empfang von von dem Benutzerendgerät 2 ausgesendeten Signalen wird ein Signalempfänger 28 verwendet. In einer in Fig. 4 schematisch dargestellten Ausführungsform weist der Signalempfänger 28 zum Empfang von Signalen des Benutzerendgerätes 2 eine Schnittstelleneinheit 30 auf.

Wie eingangs ausgeführt, kann die Schnittstelleneinheit 30 des Signalempfängers 28 eine berührempfindliche Einheit (nicht gezeigt) und/oder eine induktive und/oder kapazitive Einheit umfassen, um die Signale des Benutzerendgeräts 2 bei Kontakt der berührempfindlichen Einheit mit dem Benutzers bzw. mittels induktiver und/oder kapazitiver Kopplung zu empfangen.

Ferner umfasst der Signalempfänger 28 einen aktiven, vorteilhafterweise hoch verstärkenden, Bandpass 32 zur Unterdrückung von Störsignalen (z.B. Brummspannungen) auf. Dieser ist optional mit einem Operationsverstärker 34 verbunden, um die Signale des Bandpasses 32 verstärkt weiterzuleiten. Signale des Bandpasses 32 bzw. des Operationsverstärkers 34 werden zu einem Tondecoder 36 übertragen. Der Tondecoder 36 kann eine im Allgemeinen durch ein RC-Glied einstellbare, vorgegebene Auswertefrequenz haben, um die Existenz und Dauer von den von dem Benutzerendgerät 2 ausgesendeten Signalen entsprechenden Signalen zu ermitteln. Der Tondecoder 36 kann auch mit einem Rampengenerator 38 verwendet werden, der in den von dem Bandpass 32 oder dem Operationsverstärker 34 bereitgestellten Signalen vorliegende Frequenzen dedektiert. In Kombination mit dem Tondecoder 36 ist es dann zusätzlich möglich, Frequenzen in den von dem Benutzerendgerät 2 ausgesendeten Signalen zu ermitteln.

Bei Verwendung des Tondecoders 36 ohne den Rampengenerator 38 ist es vorsehen, mittels des Signalempfängers 28 Signale zu erzeugen, die zum Ein- und Ausschalten von Geräten und Maschinen dienen. Bei einer Kombination des Tondecoders 36 mit dem Rampengenerator 38 können aus den Signalen des Bandpasses 32 bzw. des Operationsverstärkers 34 gewonnene Informationen an nicht dargestellte Einheiten (z.B. Mikrocontroller) weitergeleitet werden, um gemäß den Informationen ein Gerät oder eine Maschine zu steuern. Diese Einheiten können auch verwendet werden, um den Rampengenerator 38 zu steuern.

Signale oder Informationen des Tondecoders 36 werden mittels einer Rechnereinheit 40 ausgewertet, um zu überprüfen, ob die von dem Benutzerendgerät 2 gesendeten Daten zur Benutzung eines Gerätes oder einer Maschine autorisieren. Ist dies der Fall, werden über eine Ausgabeeinheit 42 entsprechende Daten und/oder Signale an mit dem Signalempfänger 28 verwendete Geräte oder Maschinen weitergeleitet, um deren Betrieb zuzulassen. Wird von der Rechnereinheit 40 festgestellt, dass die empfangenen Signale nicht zur Benutzung des Gerätes oder der Maschine autorisieren oder zuvor empfangene autorisierende Daten nicht mehr empfangen werden, werden über die Ausgabeeinheit 42 das Gerät oder die Maschine so gesteuert, dass deren Betrieb nicht aufgenommen werden kann oder unterbrochen wird.

Bei einer in Fig. 5 schematisch dargestellten Ausführungsform des Signalempfängers 28 weist dieser neben den in Fig. 4 gezeigten Komponenten ein Empfangsregister 44 auf, das zur zentralen Steuerung des Signalempfängers 28 dient. Das Empfangsregister 44 steuert den Rampengenerator 38 und über diesen den Tondecoder 36 so, dass diese zur Auswertung von Signalen einer vorgegebenen Frequenz eingestellt sind.

Wird in von dem Signalempfänger 28 empfangenen Signalen ein von dem Benutzerendgerät 2 ausgesendetes Startzeichen oder eine vergleichbare Signalinformationen dedektiert, wird der Empfangspuffer (nicht bezeichnet) des Empfangsregisters 44, beispielsweise bitweise, mit aus den empfangenen Informationen gefüllt, und, falls vorgesehen, eine Prüfsumme gebildet. Bei Verwendung von Prüfsummen wird die im Folgenden beschriebene Verarbeitung von aus Signalen des Benutzerendgerätes 2 gewonnenen Informationen nur dann durchgeführt, wenn die von dem Signalempfänger 28 ermittelte Prüfsumme mit der von dem Benutzerendgerät 2 bereitgestellten Prüfsumme übereinstimmt.

Das Empfangsregister 44 steuert ein Korrespondenzregister 46 so an, dass dieses einen vorbestimmten Speicherplatz zum Zugriff durch einen Vergleicher 48 freigibt. Hierfür kann beispielsweise eine 4-Bit Steueranweisung und eine 4-Bit Speicherplatzauswahl verwendet werden.

Der so ausgewählte Speicherplatz des Korrespondenzregisters 46 wird von dem Vergleicher 48 verwendet, um die in dem ausgewählten Speicherplatz gespeicherten Informationen mit den von dem Empfangsregister 44 bereitgestellten, aus Signalen des Benutzerendgerätes 2 gewonnenen Informationen zu vergleichen.

Die Auswahl der Speicherplätze des Korrespondenzregisters 46 kann in Abhängigkeit von aus Signalen des Benutzerendgerätes 2 gewonnenen Informationen und/oder von Geräten oder Maschinen vorgenommen werden, für die der Signalempfänger 28 verwendet wird. Bei einer einfacheren Ausführung wird anstelle des Korrespondenzregisters 46 ein Speicher verwendet, der lediglich einen Satz autorisierender Daten aufweist, die von dem Vergleicher 48 mit empfangenen, aus Signalen des Benutzerendgerätes 2 extrahierten Daten verglichen werden.

Bei manuell betriebenen Werkzeugen und Geräten, deren Betrieb keine elektrische Energieversorgung erfordert, kann eine Freigabe und Blockierung mittels von dem Signalempfänger 28 gesteuerten Vorrichtung (nicht gezeigt) erfolgen, die z.B. bewegliche Komponenten der Werkzeuge bzw. Geräte mechanisch blockieren bzw. freigeben können.

Wird bei einem Vergleich von Daten durch den Vergleicher 48 keine Übereinstimmung festgestellt, d.h. Signale des Benutzerendgerätes 2 geben keine Autorisierung an, werden von dem Signalempfänger 28 keine Daten und/oder Signale zur Steuerung des Betriebs eines Geräts oder einer Maschine erzeugt. Alternativ ist es in diesem Fall möglich, dass der Signalempfänger 28 Daten und/oder Signale ausgibt, die einen Betrieb eines Gerätes oder einer Maschine blockieren.

Dedektiert der Vergleicher 48 eine Übereinstimmung von aus Signalen des Benutzerendgerätes 2 gewonnenen Daten mit Daten des Korrespondenzregisters 46 (oder des genannten Speichers), wird ein Umschalter 50 so angesteuert, dass über die Ausgabeeinheit 42 den Betrieb eines Gerätes oder einer Maschine ermöglichende Daten und/oder Informationen ausgegeben werden.

Hierbei ist es vorgesehen, dass die Freigabedaten und/oder -informationen ausgegeben werden, solange der Signalempfänger 28 Signale des Benutzerendgerätes 2 empfängt, solange empfangene Signale autorisierende, von dem Ver-Vergleicher 48 überprüfte Daten vorliegen, bis über eine Eingabeeinheit 52 ein, beispielsweise von einem Gerät oder Maschine übertragenes, den Umschalter 50 zurücksetzendes Signal oder eine durch einen nicht dargestellten Zeitgeber vorbestimmte Zeitdauer vergangen ist.

Um bei einer Freigabe des Betriebs eines Geräts oder einer Maschine zu überprüfen, ob weiterhin autorisierende Daten des Benutzerendgerätes empfangen werden, kann eine als Loss-Timer bezeichnete Einheit 54 verwendet werden. Werden innerhalb einer vorgegebenen Zeitdauer keine Signale des Benutzerendgerätes 2 empfangen, die den in dem ausgewählten Speicherplatz vorliegenden Daten des Korrespondenzregisters 46 entsprechen, wird der Umschalter 50 so angesteuert, dass die Ausgabe eines Freigabesignals unterbrochen oder beendet wird. Zur Initialisierung des Loss-Timers 54 kann ein entsprechendes Signal des Umschalters 50 verwendet werden.

Die oben beschriebenen Komponenten des Signalempfängers 28 sind verkürzt in der Tabelle Tab. 2 erläutert:

**Tab. 2: Komponenten und Funktionen des Signalempfängers**

| **Komponente** | **Aufgabe** | **Eigenschaften** |
|---|---|---|
| **Verstärker 32, 34** | verstärkt das schwache Eingangssignal | aktiver Bandpass |
| **Tondecoder 36** | Codegewinnung | Brummunterdrückung, einstellbar |
| **Ramper 38** | stellt Signalverstärkung und Frequenz ein | D/A-Wandler |
| **Empfangsregister 44** | instruiert die Komponenten | automatische serial/parallel Wandlung |
| **Vergleicher 48** | vergleicht Empfangsdaten mit K-Register | 24-Bit Vergleicher |
| **Korrespondenzregister 46** | erhält Vergleichsdaten | nicht flüchtig 16 x 24 Bit |
| **Umschalter 50** | Schalterausgang des Vergleichers | triggert Loss-Timer |
| **Loss-Timer 54** | kurzes Signal bei Wegfall eines Codes | nachtriggerbar |

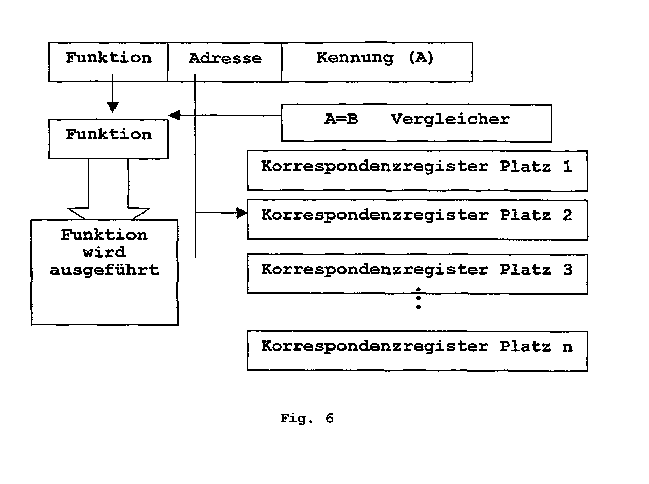

Neben der Funktion der von dem Benutzerendgerät 2 ausgesendeten Signale, einen Benutzer eines Gerätes oder einer Maschine als dafür autorisierten Benutzer zu identifizieren, können die von dem Benutzerendgerät 2 ausgegebenen, über die Haut eines Benutzers weitergeleiteten Signale auch Steuercodes angebende Signale umfassen. Diese Signale werden von dem Signalempfänger 28 in entsprechende Steuerbefehle umgewandelt und das Empfangsregister 44 entsprechend gesteuert. Wie in Fig. 6 schematisch dargestellt, umfasst eine Signalsequenz, die autorisierende Daten angibt, Steuerbefehle, die eine gewünschte, von dem Signalempfänger 28 auszuführende Funktion und einen Speicherplatz des Korrespondenzregisters 46 definieren, und eine Kennung, die einen Benutzer des Benutzerendgerätes 2 als autorisierten Benutzern charakterisiert.

Der in dem Korrespondenzregister 46 auszuwählende Speicherplatz wird mittels einer Adresse definiert, wobei der Vergleicher 48 den Inhalt der so definierten Speicherstelle des Korrespondenzregisters 46 mit der Kennung vergleicht. Wird eine Übereinstimmung der Kennung mit der in dem ausgewählten Speicherplatz des Korrespondenzregisters 46 gespeicherten Daten festgestellt, führt der Signalempfänger 28 die in den empfangenen Signalen des Benutzerendgerätes 2 definierte Funktion aus.

Ein solcher Steuerbefehl kann beispielsweise angeben, dass bei einer festgestellten Übereinstimmung mittels des Vergleichers 48 der Umschalter ein zum Betrieb eines Gerätes oder einer Maschine erforderliches Freigabesignal ausgibt.

Des Weiteren ist es auf diese Weise möglich, in freien Speicherstellen des Korrespondenzregisters 46 von einem Benutzerendgerät 2 übertragene Daten zu speichern. Gibt beispielsweise die Adresse der von dem Benutzerendgerät 2 übertragenen Signale eine Speicherstelle des Korrespondenzregisters 46 an, in der noch keine Daten gespeichert sind, kann, unter Verwendung eines Steuercodes des Benutzerendgerätes 2 oder unter Steuerung des Signalempfängers 28, die empfangene Kennung gespeichert werden. Dieser auch als Teach-In-Modus bezeichnete Betrieb des Signalempfängers 28 erlaubt es, die Autorisierung weiterer Benutzerendgeräte 2 zu überprüfen. Außerdem ist es so möglich, Signalempfänger 28 deren Speicher (nicht bezeichnet) oder Korrespondenzregister 46 keine zur Autorisierungsüberprüfung erforderliche Daten aufweisen zu programmieren.

Dieser Ablauf sowie die zuvor beschriebene Vorgehensweise bei einer Überprüfung der Autorisierung eines Benutzers, kann auch bei mehreren Signalempfängern 28 durchgeführt werden, die von einem Benutzerendgerät 2 Signale empfangen. Auf diese Weise können mehrere Gerät, auch zeitgleich, für einen autorisierten Benutzer freigegeben werden. Ferner kann z.B. so überprüft werden, ob ein Benutzer eines Geräts dieses an vorgegebenen Stellen, die wenigstens Schnittstelleneinheiten 30 zugeordneter Signalempfänger 28 aufweisen, berührt oder diesem nahe kommt. Dies erhöht die Betriebssicherheit, da der Benutzer das Gerät nur verwenden kann, wenn z.B. vorgegebene Bedienelemente betätigt werden und/oder eine vorgegebene Körperhaltung bzw. - position eingenommen wird.

Ebenso ist es möglich, dass ein Signalempfänger 28 autorisierende Daten von mehreren Benutzerendgeräten 2 empfängt. So kann überprüft werden, ob bei einer durch mehrere Personen zu bedienende Maschine die Bedienung durch eine vorgegebene Anzahl von Personen erfolgt und ob diese dazu autorisiert sind. Um zu gewährleisten, dass ein Betrieb eines Geräts von einer autorisierten Person durchgeführt wird und die Sicherheitsvorschriften einhält, z.B. einen Helm trägt, können ein von dem Benutzer selbst mitgeführtes Benutzerendgerät 2 und ein an dem Helm angeordnetes Benutzerendgerät 2 verwendet werden. Nur wenn der Signalempfänger 28 von beiden Benutzerendgeräten 2 autorisierende Daten erhält und deren Überprüfung erfolgreich ist, wird ein Gerätebetrieb freigegeben. Gleichfalls ermöglicht die Erfindung, bei einem tragbaren elektrischen Handwerkzeug, das aus Sicherheitsgründen die Handhabung mit zwei Händen erfordert, zum Beispiel eine schwere Bohrmaschine, dass an beiden Handgriffen jeweils ein Signalempfänger 28 bzw. Empfangseinrichtungen eines Signalempfängers 28 angeordnet sind, und dass diese so geschaltet und programmiert sind, dass nur beim Empfang der von dem Benutzerendgerät 2 übertragenen Signale an beiden Handgriffen der Gerätebetrieb freigegeben wird. Auch ist es möglich, im einen Handgriff des tragbaren elektrischen Handwerkzeugs ein Benutzerendgerät 2 und im anderen Handgriff einen Signalempfänger 28 anzuordnen. Nur wenn der Benutzer durch seinen Körper - auch durch Arbeitshandschuhe geschützt - beide Handgriffe umfasst, wird der Gerätebetrieb freigegeben.

Ferner ist es möglich, die von dem Benutzerendgerät 2 übertragenen signale für eine "Notabschaltung" zu verwenden. Hierfür kann beispielsweise der oder ein weiterer Signalempfänger 28, zumindest dessen zum Empfang der Signale des Benutzerendgerätes 2 verwendeten Komponenten, in einem Bereich angeordnet sein, der beim Betrieb eines Gerätes eine Gefährdung der bedienenden Person darstellen kann (z.B. rotierende Gerätekomponenten, Schneiden, Messer und dergleichen). Nähert sich eine das Gerät bedienende Person diesem Bereich oder berührt diesen, werden Signale des Benutzerendgerätes 2 von dem bzw. dem weiteren Signalempfänger 28 empfangen. In Antwort darauf kann mittels des Signalempfängers 28 der Betrieb eines damit verwendeten Gerätes gesteuert werden, dass eine Gefährdung der Bedienerperson vermieden wird, indem beispielsweise das Gerät abgeschaltet wird. Des Weiteren ist es hierbei möglich, zwischen autorisierten Bedienerpersonen, die sich auch in Gefährdungsbereichen eines Gerätes aufhalten oder dort Tätigkeiten vornehmen dürfen, und nicht autorisierten Personen unterschieden werden, bei denen eine "Notabschaltung" des Gerätes erfolgt, wenn sie sich zu nahe oder in einem Gefährdungsbereich aufhalten.

Die Verwendung mehrerer Benutzerendgeräte 2 in Verbindung mit einem Signalempfänger 28 und mehrerer Signalempfänger 28 in Verbindung mit einem Benutzerendgerät 2 wird an Hand der folgenden Tabelle Tab. 3 näher erläutert. Tab. 3 veranschaulicht, wie Signalsequenzen von drei Benutzerendgeräten 2(1), 2(2), 2(3) drei Signalempfänger 28(1), 28(2) und 28(3) steuern:

**Tab. 3: Steuerung von Signalempfängern durch Signalsequenzen von Benutzerendgeräten**

| **Benutzer-** **endgeräte** | **Sequenz** | **28(1)** | **Freigabe-** **signal** | **28(2)** | **Freigabe-** **signal** | **28(3)** | **Freigabe-** **Signal** |
|---|---|---|---|---|---|---|---|
| **2(1)** | Set 7, ABC | ABC | ja | XYZ | nein | DDD | Nein |
| **2(2)** | Set 8, XYZ | XYZ | ja | PPP | nein | XYZ | Ja |
| **2(3**) | Set 7, ABC | ABC | ja | XYZ | nein | DDD | Nein |
| **2(1)** | Set 7, ABC | ABC | ja | XYZ | nein | DDD | Ja |
| **2(2)** | Set 9, KLM | NNN | nein | KLM | nein | KLM | Nein |
| **2(3)** | Set 7, XYZ | ABC | nein | XYZ | ja | DDD | Nein |
| **2(1)** | Set 7, ABC | ABC | ja | XYZ | ja | DDD | Nein |

Die in Tab. 3 aufgeführten Signalfrequenzen umfassen alle den Steuerbefehl "Set", der angibt, dass die Empfänger 28(1), 28(2) und 28(3) bei einer Übereinstimmung einer Kennung mit Daten eines ausgewählten Speicherplatzes des jeweiligen Korrespondenzregisters 46 Freigabesignale ausgeben sollen. Die Ziffer nach dem Steuerbefehl "Set" gibt den in dem jeweiligen Korrespondenzregister 46 auszuwählenden Speicherplatz an. Die folgenden Buchstaben dienen zur Veranschaulichung von die Benutzerendgeräte 2(1), 2(2) und 2(3) autorisierenden Kennungen.

Wird beispielsweise von dem Benutzerendgerät 2(3) die Signalfrequenz "Set 7, ABC" ausgesendet, werden in den Signalempfängern 28(1), 28(2) und 28(3) die Speicherplätze mit der Nummer 7 in den Korrespondenzregistern 46 mit der Kennung "ABC" verglichen. Da lediglich bei dem Signalempfänger 28(1) eine Übereinstimmung vorliegt, gibt nur dieser Signalempfänger ein Freigabesignal aus. Im Gegensatz dazu wird bei einer von dem Benutzerendgerät 2(2) ausgesendeten Signalfrequenz "Set 9, KLM" von den Signalempfängern 28(2) und 28(3) ein Freigabesignal erzeugt, da deren Speicherplätze mit der Nummer 9 in den entsprechenden Korrespondenzregistern 46 die Kennung "KLM" aufweisen.

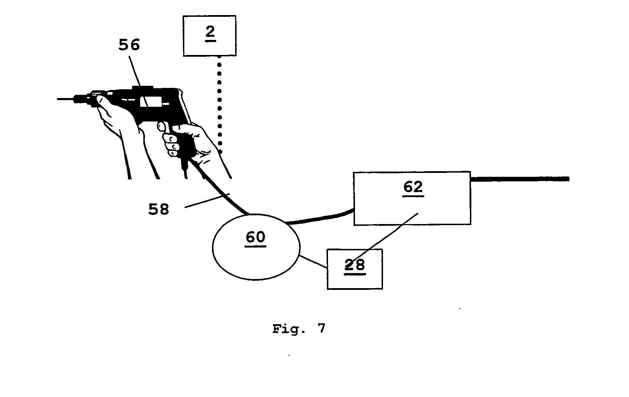

Wie in Fig. 7 veranschaulicht, ist es nicht erforderlich, dass ein zu überwachendes Gerät mit einem Signalempfänger 28 ausgestattet ist. Vielmehr ist es möglich, die von einem Benutzerendgerät 2 übertragenen, autorisierenden Daten über ein elektrisches Gerät 56 (durch unmittelbaren Kontakt oder kapazitive/induktive Einkopplung) und eine Netzleitung 58 zu einem Signalempfänger 28 zu übertragen, der beispielsweise induktiv mittels einer Vorrichtung 60 mit der Netzleitung gekoppelt ist. Wird, wie oben beschrieben, festgestellt, dass ein Benutzer zur Verwendung des elektrischen Gerätes 56 autorisiert ist, wird unter Steuerung des Signalempfängers 28 die Energieversorgung des Gerätes 56 über die Netzleitung 58 freigegeben, z.B. mittels eines steuerbaren Schalters 62. Dies erlaubt es beispielsweise einzelne oder mehrere Haushaltsgeräte in einer Küche nur dann zu betreiben, wenn sie von dazu autorisierten Benutzern (Eltern) verwendet werden oder diese sich zumindest so nahe an einem der Geräte befinden, dass eine Übertragung von autorisierenden Daten zu dem Signalempfänger 28 möglich ist. Auf diese Wiese wird auch gewährleistet, dass die Geräte nur noch bestimmungsgemäß eingesetzt werden können. Beispielsweise kann der Betrieb der Geräte nur dann freigegeben werden können, wenn sich eine zur Überwachung des Gerätebetriebes verantwortliche Person oder eine mit erste Hilfe Maßnahmen vertraute Person sich wenigstens in der Nähe des Signalempfängers 28 befindet. Werden von dem Signalempfänger 28 diese Person(en) autorisierenden Daten nicht empfangen, wird der Betrieb der Geräte nicht freigegeben, auch für den fall, dass ausschließlich autorisierte Personen die Geräte verwenden wollen.

Ein weiterer Vorteil dieser Lösung besteht darin, dass beim Betrieb mehrerer Geräte, die über eine gemeinsame Energieversorgung gespeist werden, mittels eines Signalempfängers 28 überprüft werden kann, ob alle die Geräte verwendenden Personen dazu autorisiert sind. Wird bei wenigstens einem Benutzer festgestellt, dass dieser nicht zur Benutzung eines Gerätes autorisiert ist, wird automatisch die gesamte Energieversorgung aller Geräte abgeschaltet. Bei einer Konfiguration, bei der schon die Identifikation eines autorisierten Benutzers zur Freischaltung der Energieversorgung führt, ist es somit nicht möglich, dass andere Geräte durch nicht autorisierte Benutzer in Betrieb genommen werden können. Des weiteren ist es möglich, auf diese Weise zu überprüfen, welche Geräte betrieben werden. Wenn von Benutzerendgeräten ausgesendete Daten neben den autorisierenden Daten auch Daten umfassen, die deren Benutzer identifizieren, ist es ferner möglich zu ermitteln, welcher Benutzer welches Gerät bedient.

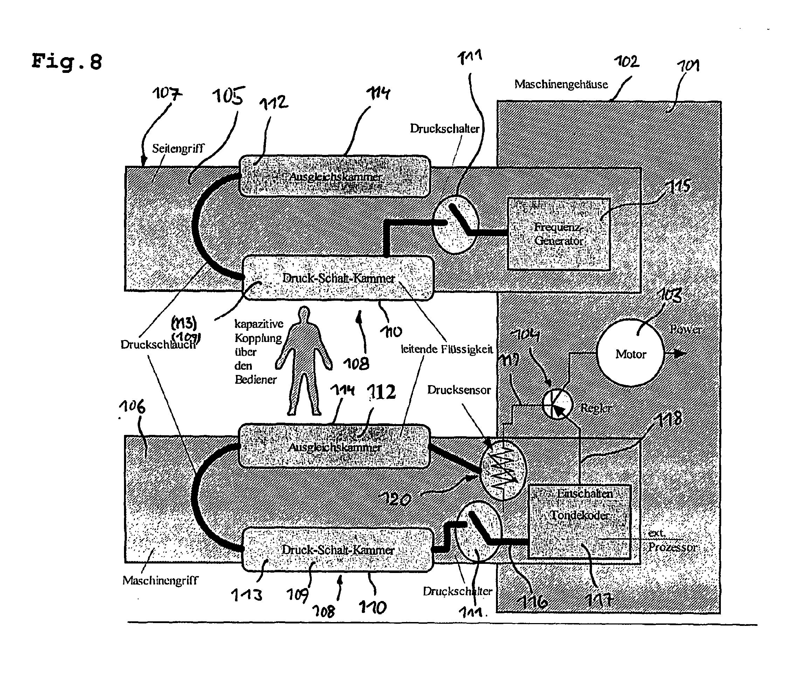

In Fig. 8 ist in Form einer Schemadarstellung ein Elektrowerkzeug 101 dargestellt, das ein Maschinengehäuse 102 umfasst. Das Elektrowerkzeug 101 umfasst ferner einen Elektromotor 103, der über eine hier schematisch als Transistor angedeutete Leistungssteuereinrichtung 104 leistungs-, drehmoment- oder drehzahlgesteuert betreibbar ist.

Das Elektrowerkzeug 101 ist mit einer ersten Griffeinrichtung 5 und einer zweiten Griffeinrichtung 106 versehen. Bei der ersten Griffeinrichtung 105 handelt es sich bei diesem Ausführungsbeispiel um eine selektiv lösbar mit dem Maschinengehäuse 102 gekoppelte Seitengriffeinrichtung. Bei der zweiten Griffeinrichtung 106 handelt es sich um eine in das Maschinengehäuse 102 integrierte Maschinengriffeinrichtung.Die Anordnung ist derart getroffen, dass bei Abnahme der ersten Griffeinrichtung das Leistungsspektrum des Elektrowerkzeuges eingeschränkt ist. (z.B. kein Betrieb im 1.Gang möglich, verminderte Maximalleistung)

Die erste Griffeinrichtung 105 umfasst eine Handgriffaussenfläche 107 zur Bereitstellung eines Handinnenflächen-Auflageabschnittes. Im Bereich des Handinnenflächen-Auflageabschnittes ist eine erste drucksensitive Zone 108 ausgebildet, zur Generierung eines hinsichtlich des Handgriff-Greifzustandes indikativen Schaltsignales.

Diese erste drucksensitive Zone 108 bildet Teil eines Fluidkammersystems 109, wobei die drucksensitive Zone 8 eine elastisch verformbare Druckkammerwandung 110 umfasst. Die Druckkammerwandung 110 ist aus einem Elastomermaterial gefertigt und bildet Teil der Handgriffaussenfläche 107. Das Fluidkammersystem109 ist bei diesem Ausführungsbeispiel mit einem zäh-viskosen Fluid befüllt. Die Fluidfüllung des Fluidkammersystems 109 kommuniziert mit einer hier als Ein/Ausschalter ausgebildeten Schalteinrichtung 111. Diese Schalteinrichtung 111 nimmt in Abhängigkeit von einer auf die erste drucksensitive Zone 108 ausgeübten Griff-Haltekraft den Ein- oder Auszustand an.

Das hier dargestellte Fluidkammersystem 9 umfasst weiterhin eine Ausgleichskammer 112, die mit einer sich unterhalb der drucksensitiven Zone 108 befindenden Druckschaltkammer 113 kommuniziert.

Die Ausgleichskammer 112 ist bei diesem Ausführungsbeispiel derart angeordnet, dass diese von der Druck-Schaltkammer 113 beabstandet ist. Die Ausgleichskammer 112 ist ähnlich wie die Druck-Schaltkammer 113 von einer elastisch verformbaren Kammerwandung 114 begrenzt. Diese elastisch verformbare Kammerwandung 114 der Ausgleichskammer 112 erstreckt sich ebenfalls im Bereich des Handinnenflächen-Auflageabschnittes der Handgriffaussenfläche 107. Die Anordnung der beiden Kammern 112, 113 zueinander ist derart getroffen, dass bei bestimmungsgemäßem Ergreifen der Handgriffeinrichtung 5 sowohl auf die Kammerwandung 114 der Ausgleichskammer 112 als auch auf die drucksensitive Zone 108 der Druck-Schaltkammer durch die Handinnenfläche eine Druckkraft ausgeübt wird. In Folge der Aufbringung dieser Druckkraft erhöht sich der Druck im Bereich des Fluidkammersystems 109 und aktiviert bei Überschreitung eines vorgegebenen Druck-Grenzwertes die Schalteinrichtung 111. Die Schalteinrichtung 111 ist mit einer Signalübertragungseinrichtung 115 gekoppelt zur Weiterleitung eines hinsichtlich des Handgriff-Greifzustandes der ersten Handgriffeinrichtung 105 indikativen Signales. Bei diesem Ausführungsbeispiel umfasst die Signalübertragungseinrichtung 115 einen Frequenzgenerator zur Generierung einer Signalsequenz, wobei letztere über hier nicht näher dargestellte Koppelungsorgane auf Grundlage elektrostatischer Wechselwirkungseffekte kapazitiv in die, die erste Griffeinrichtung 105 ergreifende Hand eines Werkzeug-Anwenders einkoppelbar ist.

Die Spannungsversorgung der in der ersten Griffeinrichtung 105 aufgenommenen elektrischen Komponenten kann über eine in die Griffeinrichtung 105 eingesetzte Speichereinrichtung (beispielsweise Batterie) erfolgen. Alternativ hierzu ist es möglich, im Bereich des Elektrowerkzeuges 101 Mittel vorzusehen, die eine Energieversorgung der im Bereich der ersten Griffeinrichtung 105 vorgesehenen elektrischen Komponenten auf induktivem oder elektrostatischem Weg ermöglichen. Es ist auch möglich, im Bereich der ersten Griffeinrichtung 105 Energieversorgungssysteme vorzusehen, die die erforderliche elektrische Energie aus äußeren, auf die Griffeinrichtung 105 einwirkenden Kräften bereitstellen.

Die bei diesem Ausführungsbeispiel mit dem Maschinengehäuse 102 dauerhaft verbundene zweite Griffeinrichtung 106 umfasst ebenfalls eine Druck-Schaltkammer 113 und eine Ausgleichskammer 114. Beide Kammern 113, 114 sind ebenfalls abschnittsweise durch elastisch verformbare Wandungen 110, 114 begrenzt. Hierdurch wird es ebenfalls möglich, hinsichtlich des Greifzustandes der zweiten Griffeinrichtung 106 indikative Signale zu generieren. Die Druckschaltkammer 113 der zweiten Griffeinrichtung 106 kommuniziert ebenfalls mit einer Schalteinrichtung 111, die hier ebenfalls als Ein/Ausschalter ausgebildet ist. Das durch die, der zweiten Griffeinrichtung 6 zugeordnete Schalteinrichtung 111 bereitgestellte Schaltsignal liegt über eine Schaltsignalleitung 116 an einer Dekodereinrichtung 17 an. Die Dekodereinrichtung 117 steht über eine Reglersignalleitung 18 mit der Leistungssteuereinrichtung 104 in Signalverbindung.

Die Leistungssteuereinrichtung 104 steht über eine weitere Eingangssignalleitung 19 mit einem Drucksensor 120 in Verbindung. Der Drucksensor 120 widerum kommuniziert mit dem, durch die Ausgleichskammer 112 und die Druckschaltkammer 113 bereitgestellten Fluidkammersystem 109.

Der Drucksensor 120 und die Schalteinrichtung 111 sind derart kallibriert, dass ein Betrieb des Elektromotors 103 erst bei Überschreiten einer vorgegebenen, auf die zweite Griffeinrichtung 106 ausgeübten Mindest-Haltekraft ermöglicht ist. Bei dem gezeigten Ausführungsbeispiel ist hierbei die Schalteinrichtung 111 derart ausgelegt, dass diese erst bei Überschreitung einer Mindest-Haltekraft ein hierfür indikatives Ausgangssignal bereitstellt. Bei Vorliegen dieses Ausgangssignales gelangt die Dekodereinrichtung 117 in einen Schaltzustand, der eine durch die Leistungssteuereinrichtung 4 gesteuerte Leistungsaufnahme des Elektromotors 103 gestattet.

Die Steuerung der Leistungsaufnahme des Elektromotors 103 durch die Leistungssteuereinrichtung 104 erfolgt in Abhängigkeit von dem an der Eingangssignaleitung 119 anliegenden Signal. Dieses Signal wird durch den Drucksensor 120 bereitgestellt. Der Drucksensor 120 kann derart aufgebaut sein, dass dieser das an der Eingangsleitung 119 anliegende Leistungsteuersignal als Analog-Signal bereitstellt.

Die vorangehend beschriebene Schaltungsanordnung eignet sich insbesondere für die Durchführung der Drehzahl oder Leistungsteuerung einer Bohrmaschine.

Die Funktionsweise einer, mit einer derartigen Schaltungseinrichtung ausgestatteten Bohrmaschine, wird nachfolgend im Zusammenhang mit einem Bohrvorgang beschrieben.

Zur Durchführung eines Bohrvorganges wird zunächst die Bohrmaschine am Maschinengehäuse 102 ergriffen und mit einem Bohrer bestückt. Anschließend wird die Bohrmaschine durch einen Maschinenanwender an der ersten Griffeinrichtung 105 und an der zweiten Griffeinrichtung 106 ergriffen. Beim Ergreifen der beiden Griffeinrichtungen 105, 106 werden die drucksensitiven Zonen 8 der beiden Griffeinrichtungen belastet. Infolge der Belastung der drucksensitiven Zonen 108 werden die beiden Schalteinrichtungen 111 jeweils druck-beaufschlagt. Die beiden Schalteinrichtungen 111 sind derart konfiguriert, dass diese erst bei Überschreitung einer auf die jeweilige Griffeinrichtung 105, 106 aufgebrachten Mindes-Haltekraft ein Ausgangssignal liefern, das für das Vorliegen der genannten Mindest-Haltkraft indikativ ist. Die Mindest-Haltekraft ist vorzugsweise derart bestimmt, dass diese erst erreicht wird, wenn die auf die beiden Griffeinrichtungen 105, 106 ausgeübten Haltekräfte die Gewichtskraft der Bohrmaschine um einen vorgegebenen Wert übersteigen.

Übersteigt die auf die erste Griffeinrichtung 105 ausgeübte Haltekraft diesen vorgegebenen Wert, so wird über die Schalteinrichtung 111 die Signalübertragungseinrichtung 115 aktiviert. Die Signalübertragungseinrichtung steht mit hier nicht näher dargestellten Signal-Einkoppelungsorganen in Verbindung, über die auf Grundlage kapazitiver Wechselwirkungseffekte ein durch die Signalübertragungseinrichtung 115 bereitgestelltes Signal, in die, die erste Griffeinrichtung 105 ergreifende Hand des Werkzeug-Benutzers einkoppelbar ist. Die derart in den Benutzer eingekoppelten Signale gelangen über den Werkzeug-Benutzer zu der zweiten Griffeinrichtung 106. Im Bereich dieser zweiten Griffeinrichtung 106 wird bei Überschreitung einer durch die Schalteinrichtung 111 definierten Mindest-Haltekraft die Dekodereinrichtung 117 mit dem über die, die zweite Griffeinrichtung 106 umgreifende Hand des Werkzeug-Benutzers zugeleiteten Signal beaufschlagt. Sofern im Bereich der Dekodereinrichtung 117 ein vorgegebenen Kriterien Rechnung tragender Signaleingang erkannt wird, gelangt die Leistungssteuereinrichtung 104 in einen, nach Massgabe eines über den Drucksensor 120 bereitgestellten Signal betreibbaren Zustand. Das durch den Drucksensor 120 bereitgestellte Signal wird durch die, auf die zweite Griffeinrichtung 106 aufgebrachten Haltekräfte bestimmt. Hohe Haltekräfte führen beispielsweise zu einer höheren Leistungsaufnahme des Elektromotors 3.

Zum Aktivieren der Bohrmaschine werden daher die auf die zweite Griffeinrichtung 106 ausgeübten Haltekräfte soweit erhöht, bis der Bohrer der Bohrmaschine mit der gewünschten Bohr-Drehzahl rotiert.

Entsprechend der während des Bohrvorganges gewünschten Bohrer-Drehzahlen wird die auf die zweite Griffeinrichtung 106 ausgeübte Griff-Haltekraft dosiert. Die Aktivierung des Bohrwerkzeuges ist dabei nur möglich, wenn sowohl die erste Griffeinrichtung 105 als auch die zweite Griffeinrichtung 106 ordnungsgemäß ergriffen sind.

In den Figuren 9a und 9b ist eine Lageerfassungseinrichtung dargestellt, die insbesondere in die in Verbindung mit Fig. 8 beschriebenen Griffeinrichtungen integrierbar ist.

Fig. 9a zeigt hierbei die Lageerfassungseinrichtung in waagerechter Ausrichtung. Die Lageerfassungseinrichtung umfasst einen, in einer Schwimmerkammer 122 aufgenommenen Schwimmer 121. Der Schwimmer 121 nimmt in Abhängigkeit von der Ausrichtung der Schwimmerkammer 122 in dieser unterschiedliche Schwimmerpositionen ein. Diese Schwimmerpositionen können über Messleitungen 123, 124, 125 erfasst werden.

Bei dem hier dargestellten Ausführungsbeispiel kann ein hinsichtlich der Position des Schwimmers 121 in der Schwimmerkammer 122 indikatives Signal aus den Potentialdifferenzen zwischen den Messleitungen 123, 124, 125 abgeleitet werden. Dieser Potentialunterschied zwischen den Messleitungen 123, 124, 125 kann insbesondere herbeigeführt werden, indem die Schwimmerkammer 122 mit einer leitfähigen Flüssigkeit befüllt ist und der Schwimmer einen Verdrängerkörper bildet, zur Veränderung des durch die Flüssigkeit bereitgestellten Leitungsquerschnitts. Der Schwimmer kann als Hohlkörper ausgebildet sein. Es ist auch möglich, anstelle des Schwimmers in der Kammer 122 lediglich eine Gas-Blase vorzusehen. Der Verlauf der Wandung der Kammer 122 kann derart gewählt sein, dass bei einer bestimmten Ausrichtung der Kammer 122 höhere Winkel-Auflösungen erreicht werden als bei anderweitigen Ausrichtungen. Es ist möglich, die hier zur Erfassung der Maschinenausrichtung vorgesehene Kammer 122 durch die vorangehend in Verbindung mit Fig. 8 beschriebenen Kammern 112, 113 bereitzustellen.

Die in den Fig. 9a und 2b dargestellte Einrichtung zur Erfassung der Maschinenausrichtung kann derart angeordnet sein, dass diese eine waagrechte oder senkrechte Ausrichtung der Bohrmaschine unterstützt.

In den Griffen, die vorzugsweise aus einem flexiblen Material beispielsweise Gummi oder Silikonkautschuk bestehen, befinden sich mindestens eine Druck- und eine mit dieser verbundenen Ausgleichskammer, die mit einer vorzugsweise leitenden Flüssigkeit (Wasser mit Frostschutzzusatz) befüllt sind. Die Druckkammer ist an einen Druckschalter angeschlossen. Bei einem einseitigen Druck von aussen auf die Druckkammer füllt sich die Ausgleichskammer, ohne dass der Druckschalter betätigt wird. Erst wenn auf die Ausgleichskammer ebenfalls Druck ausgeübt wird, wird der Schalter aktiviert. Daraufhin gelangt im Seitengriff eine Wechselspannung mit einer festen Frequenz (z.B. 300 khz) in die leitende Flüssigkeit. Im Hauptgriff der Maschine befindet sich die gleiche Anordnung mit Druckschalter, jedoch ist an diesen ein Tondekoder angebracht, der auf die Frequenz des Seitengriffes eingestellt ist. Wenn ein Bediener beide Griffe fest mit den Händen umschliesst und sobald die Druckschalter eingeschaltet sind, gelangt die Frequenz kapazitiv über dessen Haut vom Seitengriff zum Tondekoder. Dieser erzeugt einen Einschaltzustand für den Motor der Maschine solange bis der kapazitive Wechselstromkreis (z.B. durch Loslassen eines Griffes) geöffnet wird. Wenn der Austritt der Wechselspannung im Seitengriff an der Fingerseite, also gegenüber der Handballenauflage erfolgt, kann die Maschine auch nicht durch strammes Umwickeln des Griffes mit Klebeband in Betrieb genommen werden. Im Hauptgriff ist neben dem Druckschalter noch ein Drucksensor angebracht (z.B. ein Dehnungsmessstreifen), der auf den Anpressdruck auf die zu bearbeitende Fläche reagiert und die Drehzahl regelt. Ausserdem vermeidet man dadurch den Effekt, dass Maschinen nach Belastungsende mit Höchstdrehzahl laufen. Wenn beispielsweise eine Wand durchbrochen ist oder ein Werkzeug durchsägt ist, geht die Maschine mangels an Pressdruck auf eine niedrigere Drehzahl zurück. Genauso erlaubt die Erfindung auf einfache Weise einen "Softstart" um starke Drehimpulse zu vermeiden. Bei Schlagbohrgeräten dämpft die Flüssigkeit zudem die Stösse auf die Handknochen, was längeres ermüdungsfreies Arbeiten erlaubt. Schließlich ist es möglich, die Flüssigkeit dazu zu verwenden, die Arbeitslage der Maschine festzustellen. Insbesondere dann, wenn ein Verdränger-Schwimmersystem in einer Seitengriffeinrichtung angeordnet.

### Bezugszeichen

- 101: Elektrowerkzeug
- 102: Maschinengehäuse
- 103: Elektromotor
- 104: Leistungssteuereinrichtung
- 105: erste Griffeinrichtung
- 106: zweite Griffeinrichtung
- 107: Handgriffaussenfläche
- 108: erste drucksensitive Zone
- 109: Fluidkammersystem
- 110: Druckkammerwandung
- 111: Schalteinrichtung
- 112: Ausgleichskammer
- 114: elastisch verformbare Kammerwandung
- 115: Signalübertragungseinrichtung
- 116: Schaltsignalleitung
- 117: Dekodereinrichtung
- 118: Reglersignalleitung
- 119: Eingangssignalleitung
- 120: Drucksensor
- 121: Schwimmer/Gasblase
- 122: Kammer
- 123, 124, 125: Messleitungen

## Patentansprüche

1. System zur Unfallverhütung beim Betrieb von gefährdungsrelevanten Handwerkzeugen die einen ersten Handgriff und einen zweiten Handgriff umfassen, mit:
- einem autorisierende Signale bereitstellenden Benutzerendgerät (2, 4, 10) das eine Ausgangseinheit (10) umfasst, zur Einkoppelung der autorisierenden Signale in den Körper eines Benutzers auf Grundlage kapazitiver Wechselwirkungseffekte,
- einer dem zu überwachenden, gefährdungsrelevanten Gerät (56) zugeordneten Signalempfangseinrichtung (28) mit einer Schnittstelleneinheit (30) zum Empfang der in den Körper eingekoppelten Signale bei zulässiger Handhabung des Gerätes (56),
- einer dem gefährdungsrelevanten Gerät (56) zugeordneten Prüfeinrichtung (36-40, 44-48) zum Überprüfen der über die Schnittstelleneinheit (30) empfangenen, autorisierenden Signale, und
- einer dem Gerät (56) zugeordneten Freigabesignal-Ausgabeeinrichtung (42, 50, 54) zur Ausgabe eines Freigabesignals,
- wobei das Benutzerendgerät (2, 4, 10) in den ersten Handgriff eingebunden ist,
- die Signalempfangseinrichtung (28) in den zweiten Handgriff eingebunden ist, und
- die Freigabesignal-Ausgabeeinrichtung (42,50,54) bei erfolgreicher Überprüfung der empfangenen, autorisierenden Signale über eine Schalteinrichtung einen Betrieb des Gerätes (56) zulässt, und der Betrieb des gefährdungsrelevanten Gerätes (56) unterdrückt oder verhindert wird, wenn Überprüfungen der autorisierenden Signale fehlschlagen.

2. System nach Anspruch 1, bei dem die Ausgangseinheit (10) des Benutzerendgerätes (2) eine Kopplungseinheit (4) zum induktiven und/oder kapazitiven Einkoppeln der die autorisierenden Benutzerdaten umfassenden Signale in den Körper des Benutzers umfasst.

3. System nach Anspruch 1 oder 2, bei dem die Ausgangseinheit (10) des Benutzerendgerätes (2) einen Kontaktbereich (6) zum unmittelbaren Einkoppeln der die autorisierenden Benutzerdaten umfassenden Signale in den Körper des Benutzers und/oder einen Signalausgang (8) zur Übertragung der die autorisierenden Benutzerdaten umfassenden Signale zu einer mit dem Körper des ersten Benutzers unmittelbar verbundenen Einrichtung aufweist.

4. System nach einem der vorherigen Ansprüche, bei dem das Benutzerendgerät (2) ausgelegt und programmiert ist, Signale zu übertragen, die eine die Autorisierung des Benutzers angebende Kennung und Steuerbefehle zur Steuerung des Signalempfängers (28) umfassen.

5. System nach einem der vorherigen Ansprüche, bei dem die Schnittstelleneinheit (30) des Signalempfängers (28) eine berührempfindliche Einheit umfasst, um die Signale des Benutzerendgeräts (2) bei Kontakt der berührempfindlichen Einheit mit dem Benutzer zu empfangen.

6. System nach einem der vorherigen Ansprüche, bei dem die Schnittstelleneinheit (30) des Signalempfängers (28) eine induktive und/oder kapazitive Einheit zum Empfangen der Signale des Benutzerendgeräts (2) mittels induktiver und/oder kapazitiver Signalübertragung umfasst.

7. System nach einem der vorherigen Ansprüche, bei dem die Einheiten (36-40, 44-48) des Signalempfängers (28) zur Überprüfung der autorisierenden Daten ein Korrespondenzregister (46) mit wenigstens zwei, Daten zur Überprüfung der autorisierenden Daten aufweisenden Speicherstellen umfasst.

8. System nach einem der vorherigen Ansprüche, bei dem der Signalempfänger (28) ausgelegt und programmiert ist, in Abhängigkeit von den von dem Benutzerendgerät (2) empfangenen Signalen auf Daten zur Überprüfung der autorisierenden Daten zuzugreifen.

## Claims

1. A system for preventing accidents when operating dangerous hand tools that comprise a first handle and a second handle, having:
- a user terminal device (2, 4, 20) that provides authorizing signals and comprises an output unit (10) for coupling the authorizing signals into the body of a user on the basis of capacitive interactive effects,
- a signal-receiving device (28) assigned to the dangerous appliance (56) to be monitored and having an interface unit (30) for receiving the signals that have been coupled into the body when the appliance (56) has been handled correctly,
- a testing device (36-40, 44-48) assigned to the dangerous appliance (56) for checking the authorizing signals received via the interface unit (30) and
- an enable-signal outputting device (42, 50, 54) assigned to the appliance (56) for outputting an enable signal,
- the user terminal appliance (2, 4, 10) being incorporated into the first handle,
- the signal-receiving device (28) being incorporated into the second handle, and
- the enable-signal outputting device (42, 50, 54) permitting operation of the appliance (56) on successfully checking the received, authorizing signals via a switching device and operation of the dangerous appliance (56) being suppressed or prevented if checks of the authorizing signals fail.

2. The system according to Claim 1, in which the output unit (10) of the user terminal appliance (2) comprises a coupling unit (4) for inductively and/or capacitively coupling the signals comprising the authorizing user data into the body of the user.

3. The system according to Claim 1 or 2, in which the output unit (10) of the user terminal appliance (2) exhibits a contact area (6) for directly coupling the signals comprising the authorizing user data into the body of the user and/or a signal output (8) for transmitting the signals comprising the authorizing user data to a device directly connected to the body of the first user.

4. The system according to one of the preceding claims, in which the user terminal appliance (2) is designed and programmed to transmit signals that comprise an identification specifying the authorization of the user and control commands for controlling the signal receiver (28).

5. The system according to one of the preceding claims, in which the interface unit (30) of the signal receiver (28) comprises a touch-sensitive unit to receive the signals of the user terminal appliance (2) on contact of the touch-sensitive unit with the user.

6. The system according to one of the preceding claims, in which the interface unit (30) of the signal receiver (28) comprises an inductive and/or capacitive unit for receiving the signals of the user terminal appliance (2) by means of inductive and/or capacitive signal transmission.

7. The system according to one of the preceding claims, in which the units (36-40, 44-48) of the signal receiver (28) for checking the authorizing data comprise a correspondence register (46) having at least two memory sites having data for checking the authorizing data.

8. The system according to one of the preceding claims, in which the signal receiver (28) is designed and programmed to access data for checking the authorizing data as a function of the signals received by the user terminal appliance (2).

## Revendications

1. Système de prévention d'accidents pendant le fonctionnement d'outils susceptibles de causer un accident, qui comprennent une première poignée et une seconde poignée, comportant :
- un terminal d'utilisateur (2, 4, 10) mettant à disposition des signaux autorisants, qui comprend une unité de sortie (10) pour injecter les signaux autorisants dans le corps d'un utilisateur sur la base d'effets d'interaction capacitifs,
- un dispositif de réception de signaux (28) associé à l'appareil (56) susceptible de causer un accident à surveiller, comportant une unité d'interface (30) pour la réception des signaux injectés dans le corps lorsque l'appareil (56) est utilisé de manière correcte,
- un dispositif de contrôle (36-40, 44-48) associé à l'appareil (56) susceptible de causer un accident pour vérifier les signaux autorisants reçus par l'intermédiaire de l'unité d'interface (30), et
- un dispositif de sortie de signaux de validation (42, 50, 54) associé à l'appareil (56) pour émettre un signal de validation,
- le terminal d'utilisateur (2, 4, 10) étant intégré dans la première poignée,
- le dispositif de réception de signaux (28) étant intégré dans la seconde poignée, et
- le dispositif de sortie de signaux de validation (42, 50, 54) auprès la vérification réussie des signaux autorisants reçus admettant le fonctionnement de l'appareil (56) par l'intermédiaire d'un dispositif de commutation, et le fonctionnement de l'appareil (56) susceptible de causer un accident étant bloqué ou empêché lorsque les vérifications des signaux autorisants échouent.

2. Système selon la revendication 1, dans lequel l'unité de sortie (10) du terminal d'utilisateur (2) comporte une unité de couplage (4) pour l'injection inductive et/ou capacitive des signaux comportant les données d'utilisateur autorisantes dans le corps de l'utilisateur.

3. Système selon les revendications 1 ou 2, dans lequel l'unité de sortie (10) du terminal d'utilisateur (2) présente une zone de contact (6) pour l'injection directe des signaux comprenant les données d'utilisateur autorisantes dans le corps de l'utilisateur et/ou une sortie de signaux (8) pour la transmission des signaux comprenant les données d'utilisateur autorisantes à un dispositif raccordé directement avec le corps du premier utilisateur.

4. Système selon l'une quelconque des revendications précédentes, dans lequel le terminal d'utilisateur (2) est configuré et programmé pour transmettre des signaux qui comprennent une identification indiquant l'autorisation de l'utilisateur et des ordres de commande pour commander le récepteur de signaux (28).

5. Système selon l'une quelconque des revendications précédentes, dans lequel l'unité d'interface (30) du récepteur de signaux (28) comprend une unité sensible au toucher pour recevoir les signaux du terminal d'utilisateur (2) au contact de l'unité sensible au toucher avec l'utilisateur.

6. Système selon l'une quelconque des revendications précédentes, dans lequel l'unité d'interface (30) du récepteur de signaux (28) comprend une unité inductive et/ou capacitive pour recevoir les signaux du terminal d'utilisateur (2) au moyen d'une transmission de signaux inductive et/ou capacitive.

7. Système selon l'une quelconque des revendications précédentes, dans lequel les unités (36-40, 44-48) du récepteur de signaux (28) comprend, pour la vérification des données autorisantes, un registre de correspondance (46) présentant au moins deux sites de mémorisation des données autorisantes.

8. Système selon l'une quelconque des revendications précédentes dans lequel le récepteur de signaux (28) est configuré et programmé pour accéder a des données pour la vérification des données autorisantes en fonction des signaux reçus du terminal d'utilisateur (2).
